# EUROPEAN PATENT APPLICATION

(11) **EP 4 704 379 A1**
(43) Date of publication of application: **04.03.2026**
(21) Application number: 24216049.7
(22) Date of filing: 28.11.2024
(51) Int. Cl.: H04L 9/40

(54) **METHODS FOR STORING ACL ENTRIES AND METHODS FOR MATCHING ACL ENTRIES AND NETWORK APPARATUSES**

(30) Priority: 30.08.2024 CN 202411215676
(71) Applicant: New H3C Technologies Co., Ltd., Hangzhou, Zhejiang 310052 (CN)
(72) Inventor: XU, Kaikai, Beijing (CN); WANG, Qian, Beijing (CN)
(74) Representative: Bandpay & Greuter

(57) **Abstract**

The disclosure provides a method for storing ACL entries, a method for matching ACL entries, and a network apparatus. The method for storing ACL entries includes: obtaining an ACL entry to be stored, splitting the ACL entry into a first section and a second section, where the first section includes a source address and a destination address stored in the ACL entry, and the second section includes some or all of a transport layer source port, a transport layer destination port, a transport layer protocol type, a packet priority, and a port of the ACL entry; storing the first section in a TCAM, and storing the second section in an SRAM.

## Description

### CROSS-REFERENCE TO RELATED APPLICATIONS

This application claims priority to Chinese Patent Application No. 202411215676.2, filed on August 30, 2024, the disclosure of which is incorporated herein by reference in its entirety for all purposes.

### TECHNICAL FIELD

The disclosure pertains to the field of communication technology, particularly relating to methods for storing ACL entries, methods for matching ACL entries, and network apparatuses.

### BACKGROUND

Access Control List (ACL): ACL is a set of rules used to identify traffic flows. These rules refer to conditional statements that describe the matching criteria for packets, where the matching criteria may include the source address, destination address, port numbers, and other attributes of the packet. Devices use ACL rules to identify specific packets and process them based on predefined policies, and the most common application is packet filtering using ACLs. Additionally, ACLs may be used in services such as routing, security, and QoS to identify packets, and the specific processing method for these packets is determined by the business module applying the ACL.

Ternary Content Addressable Memory (TCAM): TCAM, as an extended storage resource for devices, is to store entries for services entries such as ARP (Address Resolution Protocol), ACLs, and routing. By configuring the operation mode of TCAM, the storage space allocated by TCAM to respective service entries may be adjusted to meet service operational requirements.

Static Random Access Memory (SRAM): SRAM is a static random access memory that stores data in word form and requires an address to access and manipulate the data. SRAM chips may be embedded in network apparatuses (such as routers and switches) to store and execute access control policies. In this way, the apparatuses may process ingress and egress packets based on predefined rules. By using SRAM, ACL services may achieve rapid packet filtering and access control, enhancing network security and performance.

Hash function (HASH): HASH computes and transforms data of any length to generate a fixed-length hash value that is to uniquely represent the input data. It is characterized by determinism, irreversibility, efficiency, and decentralization and is used in cryptography, data integrity verification, content addressing, data uniqueness validation, and other fields. Hash algorithms may process large amounts of data and provide unique identifiers and fast lookup functionality, making them an indispensable and important technology in information security and data management.

Network apparatuses (such as switches and routers, etc.) often use access control lists (ACLs) to control the flow of data packets during packet processing. ACLs filter and match incoming and outgoing data packets based on predefined rules to achieve security and network management objectives. However, as network size and data traffic increase, traditional ACL rule sets become larger, leading to performance degradation and configuration difficulties.

### SUMMARY

To overcome the issues presented in related technologies, the disclosure provides methods for storing ACL entries, methods for matching ACL entries, and network apparatuses.

Based on a first aspect of examples of the disclosure, a method for storing ACL entries is provided, including:

obtaining an ACL entry to be stored, and splitting the ACL entry into a first section and a second section;

where the first section includes a source address and a destination address stored in the ACL entry, and the second section includes some or all of a transport layer source port, a transport layer destination port, a transport layer protocol type, a packet priority, and a port stored in the ACL entry;

storing the first section in a Ternary Content Addressable Memory (TCAM) and storing the second section in a Static Random Access Memory (SRAM).

In some examples, storing the first section in the TCAM and storing the second section in the SRAM includes:
storing the first section in the TCAM and allocating a first identifier to the first section stored in the TCAM; and
storing the second section in the SRAM and allocating a second identifier to the second section stored in the SRAM;
where the first identifier uniquely corresponds the second identifier.

In some examples, the first section further includes some or all of the transport layer source port, the transport layer destination port, the transport layer protocol type, the packet priority, and the port stored in the ACL entry; and the second section includes information stored in the ACL entry other than information stored in the first section.

From the above examples, by splitting the ACL entry into the first section and the second section and storing the first section in the TCAM and storing the second section in the SRAM, the specifications of ACL features in network apparatuses may be enhanced.

Based on a second aspect of examples of the disclosure, a method for matching ACL entries is provided, including:
receiving a first packet and obtaining source and destination IP addresses of the first packet;
searching, based on the source and destination IP addresses of the first packet, a Ternary Content Addressable Memory (TCAM) storing first sections of a plurality of different ACL entries, to find a matched first section, and obtaining a first identifier of the matched first section;
search, based on the obtained first identifier and some or all of a transport layer source port, a transport layer destination port, a transport layer protocol type, a packet priority, and a port of the first packet, a Static Random Access Memory (SRAM) storing second sections of the plurality of different ACL entries, to find a matched second section; and
process, based on the matched second section, the first packet;
where, each first section includes a correspondence between each first identifier and the source and destination IP addresses stored in each ACL entry, each second section includes a correspondence between each second identifier and some or all of a transport layer source port, a transport layer destination port, a transport layer protocol type, a packet priority, and a port stored in each ACL entry; and each first identifier uniquely corresponds one second identifier.

In some examples, searching, based on the obtained first identifier and some or all of the transport layer source port, the transport layer destination port, the transport layer protocol type, the packet priority, and the port of the first packet, the SRAM, including:
combining the first identifier with some or all of the transport layer source port, the transport layer destination port, the transport layer protocol type, the packet priority, and the port of the first packet to obtain a combination result; and obtaining a hash value by performing hash calculation on the combination result;
determining, based on the hash value and the first identifier, a storage area storing a target second section in the SRAM; and
matching the target second section with some or all of the transport layer source port, the transport layer destination port, the transport layer protocol type, the packet priority, and the port of the first packet to obtain the matched second section.

In some examples, the first section includes some or all of the transport layer source port, the transport layer destination port, the transport layer protocol type, the packet priority, and the port stored in the ACL entry; the second section includes information stored in the ACL entry other than information stored in the first section.

In some examples, processing, based on the matched second section, the first packet includes:
discarding or permitting, based on the matched second section, the first packet.

From the above examples, it may be seen that ACL processing of packets may be completed based on splitting ACL entries and storing them in different memories.

Based on a third aspect of examples of the disclosure, the present disclosure further provides a network apparatus equipped with a Ternary Content Addressable Memory (TCAM) and a Static Random Access Memory (SRAM). The network apparatus includes:
an acquisition module, to obtain an ACL entry to be stored, and split the ACL entry into a first section and a second section, where the first section includes a source address and a destination address stored in the ACL entry, and the second section includes some or all of a transport layer source port, a transport layer destination port, a transport layer protocol type, a packet priority, and a port stored in the ACL entry;
a processing module, to store the first section in the TCAM and store the second section in the SRAM.

Based on a fourth aspect of examples of the disclosure, the present disclosure further provides a network apparatus that includes:
a receiving module, to receive a first packet and obtain source and destination IP addresses of the first packet;
a matching module, to search, based on the source and destination IP addresses of the first packet, a Ternary Content Addressable Memory (TCAM) storing first sections of a plurality of different ACL entries, find a matched first section, and obtain a first identifier of the matched first section;
the matching module is also to search, based on the obtained first identifier and some or all of a transport layer source port, a transport layer destination port, a transport layer protocol type, a packet priority, and a port of the first packet, a Static Random Access Memory (SRAM) storing second sections of the plurality of different ACL entries, to find a matched second section; and
a processing module, to process based on the matched second section, the first packet;
where, each first section includes a correspondence between each first identifier and the source and destination IP addresses stored in each ACL entry, each second section includes a correspondence between each second identifier and some or all of a transport layer source port, a transport layer destination port, a transport layer protocol type, a packet priority, and a port stored in each ACL entry; and each first identifier uniquely corresponds one second identifier.

In some examples, the matching module is to combine the first identifier with some or all of the transport layer source port, the transport layer destination port, the transport layer protocol type, the packet priority, and the port of the first packet to obtain a combination result; and obtain a hash value by performing hash calculation on the combination result;
determine, based on the hash value and the first identifier, a storage area storing a target second section in the SRAM;
match the target second section with some or all of the transport layer source port, the transport layer destination port, the transport layer protocol type, the packet priority, and the port of the first packet to obtain the matched second section.

Based on a fifth aspect of examples of the disclosure, the present disclosure further provides a network apparatus equipped with a TCAM and an SRAM, including: a processor and a non-transitory machine-readable storage medium; where, the machine-readable storage medium is to store machine-executable instructions; the processor is to read and execute the machine-executable instructions stored in the machine-readable storage medium to perform any one of examples of the method for storing ACL entries.

Based on a sixth aspect of examples of the disclosure, the present disclosure further provides a network apparatus, including: a processor and a non-transitory machine-readable storage medium; where, the machine-readable storage medium is to store machine-executable instructions; the processor is to read and execute the machine-executable instructions stored in the machine-readable storage medium to perform any one of examples of the method for matching ACL entries.

It should be understood that the above general description and subsequent detailed descriptions are merely exemplary and explanatory and do not limit the disclosure.

### BRIEF DESCRIPTION OF THE DRAWINGS

The accompanying drawings, which are incorporated into and constitute a part of the disclosure, illustrate examples consistent with the disclosure and are used together with the disclosure to explain the principles of the disclosure.
FIG. 1 is a schematic diagram of a TCAM solution based on an example of the disclosure.
FIG. 2 is a schematic diagram of an SRAM solution based on an example of the disclosure.
FIG. 3 is a schematic diagram of a method for storing ACL entries based on an example of the disclosure.
FIG. 4 is a schematic diagram of a method for matching ACL entries based on an example of the disclosure.

### DETAILED DESCRIPTION

Here, the examples will be described in detail, with examples illustrated in the accompanying drawings. When referring to the accompanying drawings, unless otherwise indicated, the same numbers in different drawings represent the same or similar elements. The examples described in the following examples do not represent all examples consistent with the disclosure. Rather, they are just examples of devices and methods that are consistent with some aspects of the disclosure, as detailed in the appended claims.

The terms used in the disclosure are for the purpose of describing specific examples and are not intended to limit the disclosure. The singular forms "a," "said," and "the" used in the disclosure and the appended claims are also intended to include the plural forms, unless the context indicates otherwise. It should also be understood that the term "and/or" used herein refers to any or all possible combinations of the corresponded listed items.

It should be understood that, although terms such as "first," "second," "third," etc., may be used in the disclosure to describe various information, the information should not be limited to these terms. These terms are just to distinguish one type of information from another. For example, without departing from the scope of the disclosure, first information may also be referred to as second information, and similarly, second information may be referred to as first information. Depending on the context, the word "if" as used herein may be interpreted as "when," "upon" or "in response to determining."

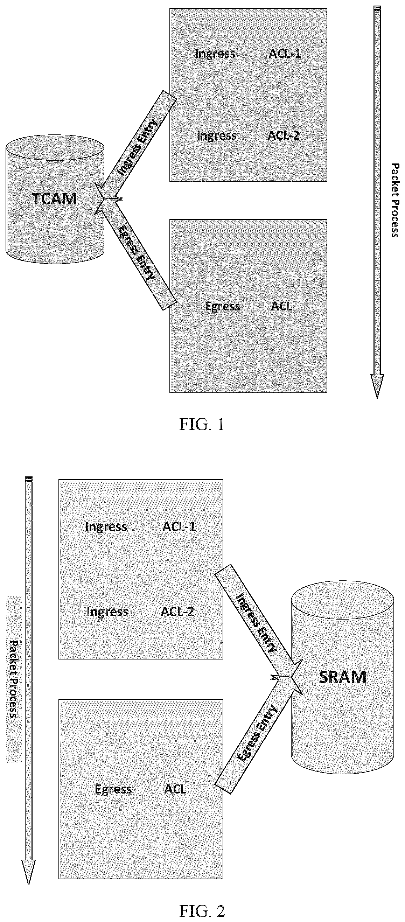

In one example, as shown in FIG. 1, the TCAM solution involves storing the ACL rules in a TCAM. Using the high-speed matching and parallel comparison capabilities of TCAM, rapid packet filtering and classification may be achieved. For example, compression algorithms compress the ACL rules and store them in the TCAM, while hierarchical storage divides the ACL rules into multiple levels and stores them in different TCAM chips.

In the examples, the issues are bellow.

Capacity limitations: the capacity of TCAM is small and cannot accommodate large-scale ACL rule sets. Further, as network sizes grow and ACL rules become more and more complex, the capacity of TCAM may soon reach its limit.

High cost: the price of TCAM chips is high, limiting their use in large-scale ACL devices. Deploying large-scale TCAM devices may require significant investment costs.

Difficulty of static configuration: due to the limited capacity of the TCAM and its inability to dynamic rules updating, rules need to be statical configured in advance. The difficulty of static configuration may pose challenges in configuration management, further, in large-scale, complex network environments.

Limited scalability: due to the capacity limitations and high cost of the TCAM, expanding and upgrading device may be difficult. In situations where the number of the ACL rules needs to be increased or the network needs to grow, it may be necessary to replace or upgrade the entire device, increasing maintenance costs and complexity.

In another example, as shown in FIG. 2, the ACL rules are stored in the SRAM table using a hash algorithm. The hash table allows for fast searching and matching of packets, enabling the storage of more ACL rules using a smaller amount of memory capacity.

In the example, although the capacity of the SRAM table may be expanded to a certain extent based on needs, which better accommodating the storage requirements of large-scale ACL rule sets, there are still the following issues.

Conflict issue: in the SRAM table, different ACL rules may map to the same hash value, causing conflicts. In response to a determination that conflicts occur, additional operations are required to resolve the conflicts, which may introduce additional delays and costs.

Search performance: although the SRAM table has the characteristic of fast searching, however, as the number of the ACL rules increases, the search performance of the SRAM table may decline. In cases with many conflicts, significant slowing down may occur to the search speed.

Update difficulty: compared to the example schemes based on the TCAM, the ACL rules in the SRAM table may be updated. However, updating rules in the SRAM table may involve rebuilding or adjusting the entire SRAM table, which may introduce higher costs and delays.

Hardware Cost: in order to support high-performance SRAM table, more complex hardware structures and algorithms may be required, which may increase complexity and hardware costs.

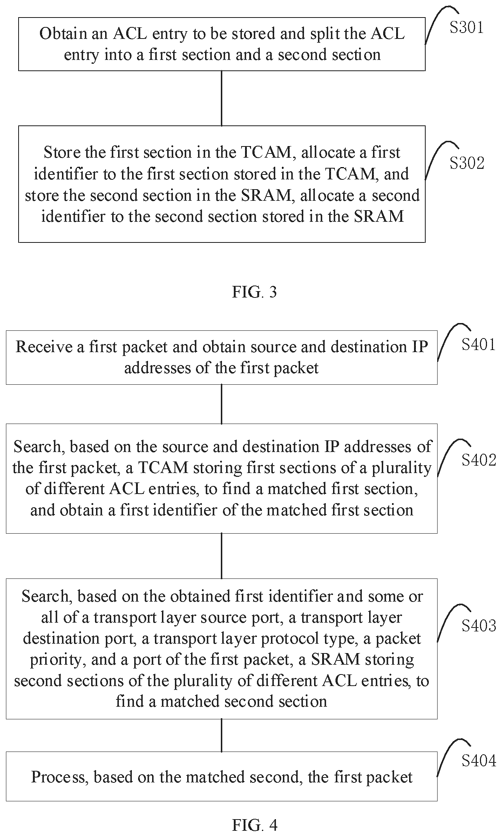

To address the above technical issues, the examples of the disclosure provide a method for storing the ACL entries, as shown in FIG. 3. The method includes blocks S301 to S302.

At S301: the ACL entry to be stored is obtained and the ACL entry is split into a first section and a second section.

The first section includes the source address and the destination address stored in the ACL entry, while the second section includes some or all of a transport layer source port, a transport layer destination port, a transport layer protocol type, a packet priority, and a port of the ACL entry (for example, Srcport, Dstport, Ip protocol, Next Header, Dscp, Port of the ACL entry). The transport layer protocol type in the disclosure may be represented by IP type field of IPv4 protocol or NEXT HEADER field of IPv6 protocol; packet priority may be achieved through Differentiated Services Code Point (Dscp), and Port is the ingress port or egress port through which matched packets pass; if the matched packet is an ingress packet, then the port is the ingress port of the matched packet; if the matched packet is an egress packet, then the port is the egress port of the matched packet.

At S302: the first section is stored in the TCAM, a first identifier is allocated to the first section stored in the TCAM; and the second section is stored in the SRAM, a second identifier is allocated to the second section stored in the SRAM.

In the examples, by splitting the ACL entry into the first section and the second section, each split ACL entry is stored in association with a first identifier (e.g., acl_cascade_key) and a second identifier (e.g., acl_cascade_action) that are introduced.

In the examples, in response to configuring services related to ACL, such as services related to the ACL configured by an operator network apparatus, IPv4 and IPv6 protocol stacks may be involved. As shown in Table 1, the ACL matching fields involved in both IPv4 and IPv6 protocol stacks are listed.

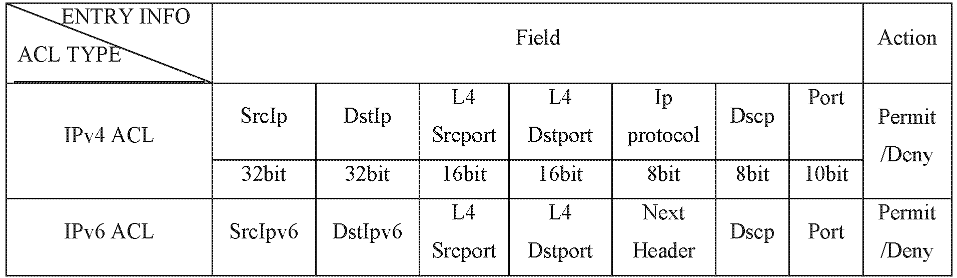

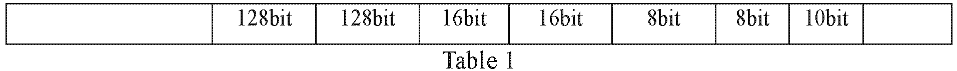

From the table above, it may be seen that the IPv4 protocol stack requires 122 bits of resources for a full ACL match, while the IPv6 protocol stack requires 314 bits of resources for a full ACL match.

In the examples, in order to conserve the resources of network apparatuses which is to store the ACL entries, the ACL entries may be split into the first section and the second section, with the first section and the second section being stored in different memories.

As shown in Table 1, in the IPv4 protocol stack, in response to a determination that the source address (SrcIp) and the destination address (DstIp) are performing ACL matching, there may be cases involving masked addresses (address subnets). Likewise, in the IPv6 protocol stack, in response to a determination that the source address (SrcIpv6) and the destination address (DstIpv6) are performing ACL matching, there may be cases involving masked addresses (address subnets). Therefore, the SrcIp and DstIp or SrcIpv6 and DstIpv6, which may include the masked address parameters, are taken as the first section obtained by splitting the ACL entry and stored in a TCAM to facilitate flexible matching in subsequent operations.

Other matching fields (L4 Srcport, L4 Dstport, Ip protocol, Dscp, Port) for IPv4 ACLs and other matching fields (L4 Srcport, L4 Dstport, Next Header, Dscp, Port) for IPv6 ACLs require full matching. Therefore, these other matching fields (a transport layer source port, a transport layer destination port, a transport layer protocol type, a packet priority, and a port, such as, L4 Srcport, L4 Dstport, Ip protocol, Dscp, Port, or L4 Srcport, L4 Dstport, Next Header, Dscp, Port) are taken as the second section obtained by splitting the ACL entry and stored in an SRAM.

In the examples, in response to a determination that storing the second section of the ACL entry in the SRAM, a hash calculation may be performed on the second section, and the second section of the ACL entry is stored in the SRAM based on the calculation result.

In an example, as shown in Table 2, due to the TCAM supports storing entries specifications ranging from 80 bits to 160 bits, invalid bits are added in response to a determination that the stored parameters do not fully fill 80 bits. Under normal conditions, in IPv4, the source address (SrcIp) and the destination address (DstIp) together occupy 64 bits. Therefore, any one of the parameters such as the source interface, destination interface, IP protocol, or service code point may be stored in the TCAM to improve utilization rate of TCAM and avoid resource wastage.

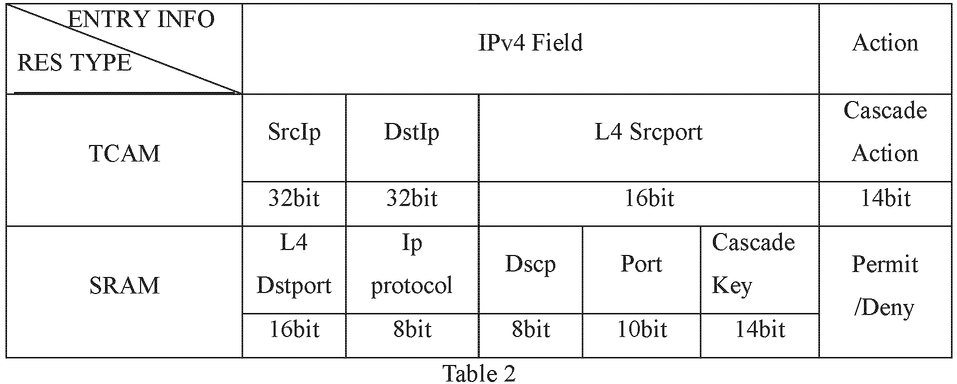

Likewise, as shown in Table 3, in IPv6, the (SrcIpv6) and the (DstIpv6) together occupy 128 bits.

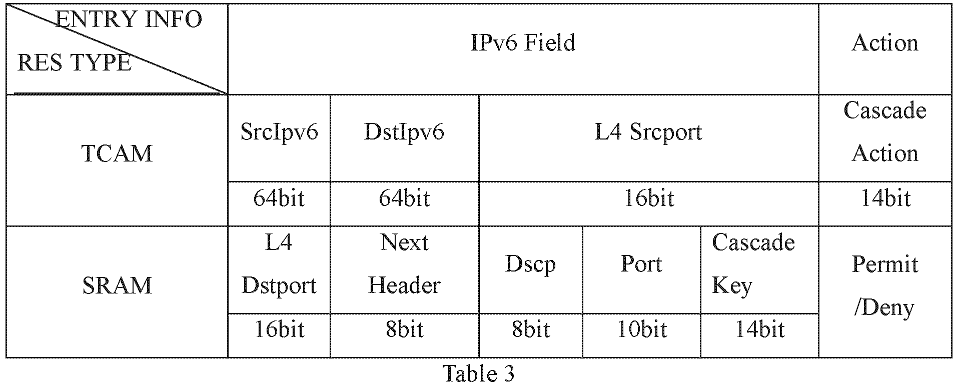

Therefore, any one of the parameters such as the source interface, the destination interface, Next Header, or service code point may be stored in the TCAM to enhance the utilization rate of TCAM resources.

In the example, after the first section of the ACL entry is stored in the TCAM, the first identifier is allocated, such as the Cascade Action in Table 2 or Table 3. After the second section is stored in the SRAM, the second identifier is allocated, such as the Cascade Key in Table 2 or Table 3. The first identifier is uniquely corresponded with the second identifier.

In an example, suppose there are three ACL entries, ACL1, ACL2, and ACL3, stored based on the methods described in the above examples, as shown in Table 4:

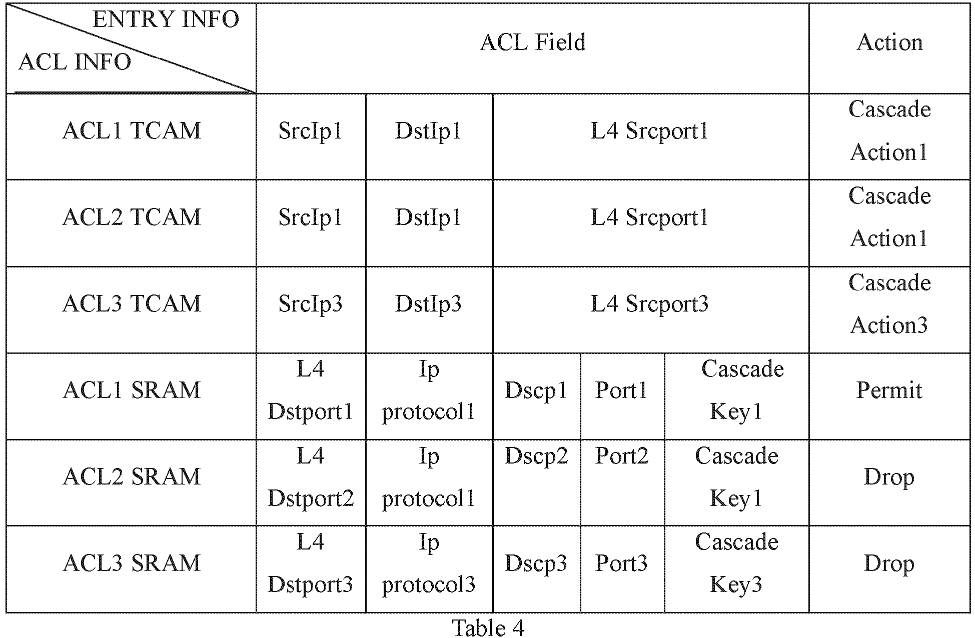

In Table 4, ACL1, ACL2, and ACL3 are each split into a first section and a second section. The first sections of ACL1, ACL2, and ACL3 are stored in the TCAM, which correspond to the contents of ACL1 TCAM, ACL2 TCAM, and ACL3 TCAM in Table 4. The second sections of ACL1, ACL2, and ACL3 are stored in the SRAM, which correspond to the contents of ACL1 SRAM, ACL2 SRAM, and ACL3 SRAM in Table 4.

The First identifier, Cascade Action1, Cascade Action2, and Cascade Action3 are allocated to ACL1 TCAM, ACL2 TCAM, and ACL3 TCAM respectively. Second identifiers, Cascade Key1, Cascade Key2, and Cascade Key3 are allocated to ACL1 SRAM, ACL2 SRAM, and ACL3 SRAM respectively. It may be observed that the first identifiers for ACL1 TCAM and ACL2 TCAM are the same. Since the first identifier uniquely corresponds to the second identifier, the second identifiers for ACL1 SRAM and ACL2 SRAM are both Cascade Key 1.

In an example, in response to a determination that the rule information stored in the TCAM is same, then these two ACLs will be assigned the same Cascade Key. In the case, just one split ACL needs to be issued to the TCAM resource. However, for the ACLs issued to the SRAM, since their corresponding rule information is different, two split ACL rules still need to be issued.

It should be noted that in the example, in response to a determination that a network apparatus configures ACL features, the ACL features may be applied to both the inbound and outbound directions of the interface. The ACLs for both inbound and outbound directions are applicable to the technology in the disclosure. In some examples, the term "inbound" and the term "ingress" have a same meaning, and the term "outbound" and the term "egress" have a same meaning.

From the above examples, it may be seen that, in response to storing the ACL entries, ACL entries are split and the split ACL entries are respectively stored in the TCAM and the SRAM, which may increase the specifications of ACL features on network apparatuses. In theory, the method may increase their specifications by 200%-300% on the original basis, and reduce ACL feature redundancy by 50%-100%.

For example, in a set of test results, the background environment is a certain network apparatus of an operator, the TCAM resources are: 12 * 1024 * 160 bits = 12288 * 160 bits.

Here, 12 represents a total number of Banks that may be accessed in parallel;
1024 represents the number of entry resources that need to be accessed in each Bank;
160bit represents that each entry resource may store an ACL with a maximum bit width of 160bit;
where, TCAM resources are: 12 * 1024 * 160 bits = 12288 * 160 bits.

In response to a determination that the ACL is applied to an interface of the device, and the same ACL rules are applied to both the Inbound and Outbound directions, with the same specifications for IPv4 ACL and IPv6 ACL.

In response to using TCAM resources alone: an IPv4 ACL occupies 1*160 bits, so Inbound and Outbound together occupy 2*160 bits. An IPv6 ACL occupies 1*320 bits, so Inbound and Outbound together occupy 2* 320 bits = 4*160 bits. In this way, the device may support 2048 IPv4 ACLs and 2048 IPv6 ACLs, satisfying parallel and high-performance lookups.

In response to using SRAM resources alone: requirements cannot be met. IPv4 ACLs may be supported, and IPv6 ACLs cannot be deployed.

In response to integrating TCAM and SRAM resources: an IPv4 ACL occupies 1*80 bits of TCAM resources and 2*60 bits of SRAM resources. An IPv6 ACL occupies 1*160 bits of TCAM resources and 2*60 bits of SRAM resources. Limited by the specification of TCAM resources, the device may support 8192 IPv4 ACLs and 8192 IPv6 ACLs, satisfying parallel and high-performance lookups.

The test results show that the ACL specification of operator network apparatus is increased by 300%, the redundancy of ACL features is reduced by 50% (in the case where each ACL is different; in response to a determination that there are identical sections of ACLs stored in TCAM after splitting, the redundancy may be further reduced).

Based on the above method examples, the disclosure also provides a method for matching ACL entries, as shown in FIG. 4. The method includes blocks S401 to S404.

At S401: a first packet is received and source and destination IP addresses of the first packet are obtained.

At S402: a Ternary Content Addressable Memory (TCAM) storing first sections of a plurality of different ACL entries is searched based on the source and destination IP addresses of the first packet to find a matched first section and a first identifier of the matched first section is obtained.

S403: a Static Random-Access Memory (SRAM) storing second sections of the plurality of different ACL entries is searched based on the obtained first identifier and some or all of a transport layer source port, a transport layer destination port, a transport layer protocol type, a packet priority, and a port of the first packet, to find a matched second section.

S404: the first packet is processed based on the matched second section.

Here, the first section includes the correspondence between the source and destination IP addresses of each ACL entry and the first identifier. The second section includes the correspondence between the second identifier and some or all of the transport layer source port, the transport layer destination port, the transport layer protocol type, the packet priority, and the port of each ACL entry. Each first identifier uniquely corresponds to one second identifier.

In process S401, in response to a determination that the network apparatus receives the first packet, the ACL policy for the first packet may be determined through two matching processes. First, the network apparatus selects the content to match with the TCAM after receiving the first packet.

For example, in response to a determination that the first section stored in the TCAM includes the source and destination IP addresses, then the source and destination IP addresses carried in the first packet are obtained. In other examples, in response to a determination that the first section stored in the TCAM includes the source and destination IP addresses, and the transport layer source port, then the source and destination IP addresses, and the transport layer source port carried in the first packet are obtained.

In the example, the source and destination IP addresses obtained from the first packet are matched with the first section of each ACL entry stored in the TCAM. As shown in Table 4, assuming that after matching, it is determined that ACL1 TCAM is matched, then the first identifier, Cascade Action1, is obtained.

After Cascade Action1 is obtained, Cascade Action1 is overlaid with other information in the first packet excluding the source and destination IP addresses, and the overlaid content is matched with the content in the SRAM.

In an example, the overlaid content may be matched with all the content in the SRAM one by one. In another example, the overlaid content may be matched with the content in the SRAM corresponding to Cascade Action1. In this way, the content in the SRAM is to match with the overlaid content may be narrowed down first, thereby saving the computing resources of the network apparatus and improving the matching speed.

In response to a determination that matching other information of the first packet except the source and destination IP addresses with the SRAM, the other information and Cascade Action (the first identifier) of the first packet may first be subjected to hash calculation to obtain a hash value. The hash value and the first identifier are to determine a storage area storing a target second section in the SRAM. In the process, the second section may be stored with the hash value and the second identifier as indexes. For example, in the SRAM, the same hash value may correspond to multiple second section contents. The section corresponding to the second identifier in the SRAM is determined through the first identifier. The target second section is then determined from the section corresponding to the second identifier through the hash value (in other examples, the section corresponding to the hash value of the first packet in the SRAM may be determined first, and then the target second section is determined based on the second identifier corresponding to the first identifier). Some or all of the transport layer source port, the transport layer destination port, the transport layer protocol type, the packet priority, and the port of the first packet are matched with the target second section to obtain a matched second section.

In process S404, the first packet is processed based on the matched second section, which includes discarding the first packet or permitting the first packet based on the matching results.

Through the aforementioned examples, it may be seen that after splitting and issuing the ACL, matching is performed in TCAM resources during the Ingress ACL-1 stage, and matching is performed in SRAM resources during the Ingress ACL-2/Egress ACL stages. Therefore, the specifications of ACL features in operator network apparatuses are improved, increasing their specifications by 200%-300% on the original basis and reducing ACL feature redundancy by 50%-100%.

Based on the aforementioned examples, the disclosure further provides a network apparatus equipped with a TCAM and a SRAM. The network apparatus includes:
an acquisition module, to acquire an ACL entry to be stored and split the ACL entry into a first section and a second section, where the first section includes a source address and a destination address stored in the ACL entry, and the second section includes some or all of a transport layer source port, a transport layer destination port, a transport layer protocol type, a packet priority, and a port stored in the ACL entry;
a processing module, to store the first section in the TCAM and store the second section in the SRAM.

Based on the aforementioned examples, the disclosure further provides another network apparatus. The network apparatus includes:
a receiving module, to receive a first packet and obtain source and destination IP addresses of the first packet;
a matching module, to search, based on the source and destination IP addresses of the first packet, a Ternary Content Addressable Memory (TCAM) storing first sections of a plurality of different ACL entries, find a matched first section, and obtain a first identifier of the matched first section;
the matching module, further to search, based on the obtained first identifier and some or all of a transport layer source port, a transport layer destination port, a transport layer protocol type, a packet priority, and a port of the first packet, a SRAM storing second sections of the plurality of different ACL entries, to find a matched second section; and
a processing module, to process, based on the matched second section, the first packet;
where, each first section includes a correspondence between each first identifier and the source and destination IP addresses stored in each ACL entry, and the second section includes a correspondence between each second identifier and some or all of a transport layer source port, a transport layer destination port, a transport layer protocol type, a packet priority, and a port of each ACL entry; and each first identifier uniquely corresponds to one second identifier.

Among them, the matching module is to combine the first identifier with some or all of the transport layer source port, the transport layer destination port, the transport layer protocol type, the packet priority, and the port of the first packet to obtain a combination result and obtain the hash value by performing hash calculation on the combination result;
determine, based on the hash value and the first identifier, a storage area storing a target second section stored in the SRAM;
match the target second section with some or all of the transport layer source port, the transport layer destination port, the transport layer protocol type, the packet priority, and the port of the first packet to obtain a matched second section.

For the device example, since it corresponds to the method example, refer to the partial description of the method example for relevant details. The aforementioned device example described is just illustrative, where the modules described as separate components may or may not be separated. The components displayed as modules may or may not be physical modules, meaning they may be located in one place or distributed across multiple network modules. Some or all of the modules may be selected to achieve the purpose of the disclosure based on actual needs. Ordinary technicians in the field may understand and implement it without exercising creative efforts.

The aforementioned description pertains to specific examples of the disclosure. Other examples fall within the scope of the appended claims. In some cases, the actions or process recorded in the claims may be executed in a different order from those in the examples and may still achieve the desired results. Additionally, the processes depicted in the drawings do not require a specific or consecutive order to achieve the desired results. In certain examples, multitasking and parallel processing are possible or may be advantageous.

After considering the disclosure and practicing the disclosure claimed herein, technicians in the field will conceive of other examples of the disclosure. The disclosure aims to cover any variations, uses, or adaptations of the disclosure that follow its general principles and include common knowledge or customary technical means in the technical field that are not claimed in the disclosure. The disclosure and examples are just considered exemplary, and the true scope and spirit of the disclosure are indicated by the following claims.

It should be understood that the disclosure is not limited to the precise structures described above and shown in the drawings, and various modifications and changes may be made without departing from its scope. The scope of the disclosure is limited just by the appended claims.

The above are some examples of the disclosure and are not intended to limit the disclosure. Any modifications, equivalent substitutions, and improvements made within the spirit and principles of the disclosure should be included within the scope of protection of the disclosure.

## Claims

1. A method for storing Access Control List, ACL, entries, wherein the method comprises:
obtaining an ACL entry to be stored, and splitting the ACL entry into a first section and a second section;
wherein the first section comprises a source address and a destination address stored in the ACL entry, and the second section comprises some or all of a transport layer source port, a transport layer destination port, a transport layer protocol type, a packet priority, and a port stored in the ACL entry;
storing the first section in a Ternary Content Addressable Memory, TCAM, and the second section in a Static Random Access Memory, SRAM.

2. The method according to claim 1, wherein, storing the first section in the TCAM and the second section in the SRAM comprising:
storing the first section in the TCAM;
allocating a first identifier to the first section stored in the TCAM;
storing the second section in the SRAM;
allocating a second identifier to the second section stored in the SRAM; wherein the first identifier uniquely corresponds the second identifier.

3. The method according to claim 1 or 2, wherein
the first section further comprises some or all of the transport layer source port, the transport layer destination port, the transport layer protocol type, the packet priority, and the port stored in the ACL entry; and
the second section comprises information stored in the ACL entry other than information stored in the first section.

4. A method for matching ACL entries, wherein the method comprises:
receiving a first packet;
obtaining source and destination IP addresses of the first packet;
searching, based on the source and destination IP addresses of the first packet, a Ternary Content Addressable Memory, TCAM, storing first sections of a plurality of different ACL entries, to find a matched first section, and obtaining a first identifier of the matched first section; and
searching, based on the obtained first identifier and some or all of a transport layer source port, a transport layer destination port, a transport layer protocol type, a packet priority, and a port of the first packet, a Static Random-Access Memory, SRAM, storing second sections of the plurality of different ACL entries, to find a matched second section, and
processing the first packet based on the matched second section;
wherein, each first section comprises a correspondence between each first identifier and the source and destination IP addresses stored in each of the plurality of different ACL entries, each second section comprises a correspondence between each second identifier and some or all of a transport layer source port, a transport layer destination port, an transport layer protocol type, a packet priority, and a port stored in each of the plurality of different ACL entries; and each first identifier uniquely corresponds one second identifier.

5. The method according to claim 4, wherein searching, based on the obtained first identifier and some or all of the transport layer source port, the transport layer destination port, the transport layer protocol type, the packet priority, and the port of the first packet, the SRAM, comprising:
combining the first identifier with some or all of the transport layer source port, the transport layer destination port, the transport layer protocol type, the packet priority, and the port of the first packet to obtain a combination result; and obtaining a hash value by performing hash calculation on the combination result;
determining, based on the hash value and the first identifier, a storage area storing a target second section in the SRAM;
matching the target second section with some or all of the transport layer source port, the transport layer destination port, the transport layer protocol type, the packet priority, and the port of the first packet area to obtain the matched second section.

6. The method according to claim 4 or 5, wherein
the first section comprises some or all of the transport layer source port, the transport layer destination port, the transport layer protocol type, the packet priority, and the port stored in the ACL entry;
the second section comprises information stored in the ACL entry other than information stored in the first section.

7. The method according to any one of claims 4 to 6, wherein processing the first packet based on the matched second section comprising:
discarding or permitting the first packet based on the matched second section.

8. A network apparatus, equipped with a Ternary Content Addressable Memory, TCAM, and a Static Random Access Memory, SRAM, comprising:
an acquisition module, to obtain an Access Control List, ACL, entry to be stored, and split the ACL entry into a first section and a second section, wherein the first section comprises a source address and a destination address stored in the ACL entry, and the second section comprises some or all of the information of a transport layer source port, a transport layer destination port, a transport layer protocol type, a packet priority, and a port stored in the ACL entry;
a processing module, to store the first section in the TCAM and store the second section in the SRAM.

9. A network apparatus, comprising:
a receiving module, to receive a first packet and obtain source and destination IP addresses of the first packet;
a matching module, to search, based on the source and destination IP addresses of the first packet, a Ternary Content Addressable Memory, TCAM, storing first sections of a plurality of different ACL entries, to find a matched first section, and obtain a first identifier of the matched first section;
the matching module further, to search, based on the obtained first identifier and some or all of a transport layer source port, a transport layer destination port, a transport layer protocol type, a packet priority, and a port of the first packet, a Static Random-Access Memory, SRAM, storing second sections of the plurality of different ACL entries, to find a matched second section;
a processing module, to process the first packet based on the matched second section;
wherein, each first section comprises a correspondence between each first identifier and the source and destination IP addresses stored in each of the plurality of different ACL entries, each second section comprises a correspondence between each second identifier and some or all of a transport layer source port, a transport layer destination port, a transport layer protocol type, a packet priority, and a port stored in each of the plurality of different ACL entries; and each first identifier uniquely corresponds one second identifier.

10. The network apparatus according to claim 9, wherein:
the matching module is to combine the first identifier with some or all of the transport layer source port, the transport layer destination port, the transport layer protocol type, the packet priority, and the port of the first packet to obtain a combination result; and obtain a hash value by performing hash calculation on the combination result;
determine, based on the hash value and the first identifier, a storage area storing a target second section in the SRAM;
match the target second section with some or all of the transport layer source port, the transport layer destination port, the transport layer protocol type, the packet priority, and the port of the first packet to obtain the matched second section.

11. A network apparatus, equipped with a Ternary Content Addressable Memory, TCAM, and a Static Random Access Memory, SRAM, comprising:
a processor and a non-transitory machine-readable storage medium; wherein,
the machine-readable storage medium is to store machine-executable instructions;
the processor is to read and execute the machine-executable instructions stored in the machine-readable storage medium to perform the method according to any one of claims 1 to 3.

12. A network apparatus, comprising:
a processor and a non-transitory machine-readable storage medium; wherein,
the machine-readable storage medium is to store machine-executable instructions;
the processor is to read and execute the machine-executable instructions stored in the machine-readable storage medium to perform the method according to any one of claims 4 to 7.
